# EUROPEAN PATENT SPECIFICATION

(11) **EP 2 857 723 B1**
(45) Date of publication and mention of the grant of the patent: **03.05.2017**
(21) Application number: 13793834.6
(22) Date of filing: 23.05.2013
(51) Int. Cl.: F16K 5/04

(54) **ROTARY VALVE**
DREHVENTIL
ROBINET TOURNANT

(30) Priority: 24.05.2012 JP 2012118977
(43) Date of publication of application: 08.04.2015
(73) Proprietor: Mikuni Corporation, Tokyo 101-0021 (JP)
(72) Inventor: OIKAWA, Takumi, Odawara-shi Kanagawa 250-0055 (JP)
(74) Representative: Prüfer & Partner mbB Patentanwälte · Rechtsanwälte
(86) International application number: PCT/JP2013/064415
(87) International publication number: WO 2013/176234

(56) References cited:
- EP-A2- 1 318 337
- DE-A1- 10 218 176
- JP-A- H0 246 378
- JP-A- H01 206 169
- JP-A- H01 234 665
- JP-A- H08 247 306
- JP-A- H09 119 532
- JP-U- H04 117 965
- US-A1- 2007 267 588

## Description

### Technical Field

The present invention relates to a rotary valve including a rotor which is rotated to open and close a flow passage.

### Background Art

In an engine (internal combustion engine) of a vehicle such as an automobile, for the purpose of enhancing the warm-up performance of the engine, enhancing the fuel efficiency by operating the engine at an optimal temperature, and the like, it is considered that a bypass passage through which cooling water bypasses a radiator and is returned to the engine as it is provided separately from a main passage through which the cooling water is circulated between the engine and the radiator, a cooling water control valve is provided in the main passage, and by controlling the opening degree of the cooling water control valve according to the temperature of the cooling water and the other values, the amount of the cooling water which flows through the main passage and is cooled by the
radiator is controlled. Note that, the cooling water is circulated by a pump driven by the engine, and during an operation of the engine, the cooling water is mainly circulated through the main passage in a case where the cooling water control valve is opened, and is circulated through the bypass passage in a case where the cooling water control valve is closed.

For example, during the start-up of the engine at a low cooling water temperature, the main passage is blocked to allow the cooling water to return to the engine as it is from the bypass passage without passing through the radiator, thereby accelerating the warm-up of the engine. In addition, for example, in order to control the temperature of the cooling water to optimize the combustion of a fuel in the engine even after the warm-up, opening and closing (the opening degree) of the cooling water control valve is adjusted.

In the cooling water control valve, the use of a rotary valve or the like is considered.

In the rotary valve, for example, a flow passage is provided in a rotor, and in a housing which accommodates the rotor, an opening which is connected to an external flow passage and communicates with the flow passage in the rotor in a case where the angle of the rotor is an angle at which the rotor is opened is formed.

In addition, a seal is disposed between the opening of the housing and an opening of the flow passage of the rotor such that distribution of flowing water can be efficiently performed even when there is a gap between the openings.

For example, a structure in which a large gap is provided between the opening of the housing and the opening of the rotor and a packing is disposed therebetween is suggested (for example, refer to Patent Literature 1).

The packing is formed in a cylindrical shape in which both ends are open, one end portion serves as a seal for the opening of the rotor, and the other open end serves as a seal for the opening of the housing. In Patent Literature 1, the outer circumferential surface of the rotor and the inner circumferential surface of a part of the housing that accommodates the rotor are formed in cylindrical shapes, and the distance between the seal on the housing side and the seal on the rotor side is substantially constant at any position along the circumferential direction of the openings of the housing and the rotor.

Note that, for example, in a case where the inner surface which is provided with the opening on the housing side and opposes the rotor is a flat surface, the seal on the housing side has a flat surface shape, and the seal on the rotor side has a cylindrical surface shape. For this reason, the distance between the seals varies depending on the position in the circumferential direction. In this case, the length of a rubber as the packing disposed between the seals varies, and thus surface pressure applied to the seal from a surface that abuts on the seal varies with position. Therefore, there is concern that the function of the seal may not be sufficiently exhibited. As described above, by causing the distance between the seals to rarely change with position, the surface pressure can be allowed to be substantially constant even at different positions in the circumferential direction of the seal.

Document EP1318337A2 discloses a rotary valve according to the preamble of claim 1.

### Citation List

### Patent Literature

Patent Literature 1: JP 2000-193104 A

### Summary of Invention

### Technical Problem

In a case where sealing is performed only by an elastic force based on compression of a rubber-like seal member body, for example, the use of a hard rubber-like member is considered. However, in this case, there is a problem of followability due to a small displacement, or there is a problem in that the rotation of the rotor is stopped when foreign matter becomes stuck or the like. In combination with the seal member, for example, it is preferable to use a spring, and for example, it is preferable to use a coil spring, a wave washer, or the like by which a certain degree of displacement is expected.

However, when the seal parts of the rotor and the housing have complex structures due to the spring, the cost of the rotary valve is increased, and an assembly operation becomes complex.

Therefore, a seal member which is a single member that realizes members having a plurality of functions needed to enable a reduction in cost and an efficient assembly operation with a structure that enables efficient distribution of flowing water is required.

In addition, in consideration of positioning and holding of the seal member, it is preferable to dispose a cylindrical member that supports the seal on the housing side, and in consideration of assembly, it is preferable that a cylindrical nipple or the like that supports a cylindrical tool member be inserted into a part of the housing to which an external pipe is connected.

However, the contact part (tip end part) of the seal member which comes into contact with the rotor has a cylindrical surface shape, and the shape (a height from a base end portion when the base end portion is in one plane) varies depending on the position in the circumferential direction. In this case, for example, when the nipple is inserted into the seal member and thus the seal member is fixed, when a tip end surface having a shape corresponding to the above-mentioned cylindrical outer circumferential surface of the seal member is not correctly disposed on the cylindrical outer circumferential surface of the rotor, that is, when a positional shift occurs in the circumferential direction, there is concern that a high surface pressure and a low surface pressure occur on a contact surface between the rotor and the seal member and a function as a seal is insufficient.

In addition, when the seal member is moved in the circumferential direction during use, the same problem occurs.

The present invention has been made taking the forgoing circumstances into consideration, and a purpose thereof is to provide a rotary valve that uses a seal member having a shape in which a plurality of functions is integrated and can prevent a positional shift in a circumferential direction of the seal member.

### Solution to Problem

In order to achieve the object described above, a rotary valve of the present invention includes: a rotor which is rotated to open and close a flow passage; and a casing which accommodates the rotor,
wherein a rotor opening which is a part of a passage of a fluid is formed in a cylindrical outer circumferential surface of the rotor,
a rotor accommodating space which rotatably accommodates the rotor is formed in the casing,
a casing opening which is a passage of the fluid when communicating with the rotor opening is formed in an inner surface of the rotor accommodating space of the casing that faces the rotor,
a cylindrical seal member which extends to abut on the outer circumferential surface of the rotor including the rotor opening, and a positioning portion which determines an angular position around an axis of the seal member are provided in the casing opening,
the cylindrical seal member includes a cylindrical body portion in which a tip end shape on the rotor side is a shape along the outer circumferential surface of the rotor, a tip end abutting portion which is provided in a tip end portion of the body portion on the rotor side to be integrated with the body portion toward the outer circumferential surface of the rotor and abuts on the outer circumferential surface of the rotor, and a rotation stopping portion which is engaged with the positioning portion of the casing opening to regulate a rotation around the axis of the seal member and to determine the angular position around the axis of the seal member,
the tip end abutting portion has a cylindrical shape and has a shape that is curved along the outer circumferential surface of the rotor,
the tip end abutting portion includes an inwardly curved portion which is narrowed inwardly toward a tip end side and is curved to be folded back and/or an outwardly curved portion which is widened outwardly toward the tip end side and is curved to be folded back, and
the seal member is disposed so that the inwardly curved portion and/or the outwardly curved portion is pressed against the outer circumferential surface of the rotor.

According to this configuration, the tip end abutting portion of the seal member includes the inwardly curved portion which is narrowed inwardly and is curved to be folded back and/or the outwardly curved portion which is widened outwardly and is curved to be folded back, and the inwardly curved portion and/or the outwardly curved portion functions as a seal which abuts on the rotor and also functions as a spring.

That is, the inwardly curved portion and/or the outwardly curved portion has a shape in which, for example, an elastic force is not applied by a rubber-like resin as a lump, but for example, a biasing force is easily applied by equivalent elastic deformation as that of a leaf spring or the like. That is, since the cross-section thereof has a shape that is bent and folded back, in a case where a pressing force is applied, a part closer to the base end side than the contact position that comes into contact with the rotor in the direction intersecting the pressing direction functions as a spring. In addition, the apex part of the folded part comes into contact with the outer circumferential surface of the rotor, and thus sealing characteristics can be easily secured compared to a case where the tip end comes into contact therewith.

The shape of the inwardly curved portion and/or the outwardly curved portion along the circumferential direction is the same curved shape as the rotor opening, and even when the rotor opening has a shape along the cylindrical surface, the inwardly curved portion and/or the outwardly curved portion which functions as a spring also has the same cylindrical surface shape such that an elastic force is less likely to change with position.

In addition, it is preferable that the end surface of the body portion of the seal member on the base end side thereof have a shape which comes into contact with the member on the casing side, and the tip end abutting portion of the inwardly curved portion and/or the outwardly curved portion as a spring is pressed against the outer circumferential surface of the rotor and receives a reaction force from the member on the casing side to be supported. In addition, in a case where a seal is also needed on the casing side, the base end of the body portion of the inwardly curved portion and/or the outwardly curved portion as a spring is pressed against the member on the casing side and thus can function as the seal.

Since the tip end abutting portion (inwardly curved portion and/or outwardly curved portion) of the seal member has a shape along the cylindrical outer circumferential surface, when the angular position is shifted in a rotation around the axis of the seal member, the surface pressure applied to the contact part between the rotor and the seal member varies depending on the position in the circumferential direction of the seal member to cause deterioration in a seal function. However, it is possible to perform the positioning of the angle around the axis and to prevent the shift of the angular position, using the rotation stopping portion of the seal member engaged with the positioning portion of the casing opening.

In the above configuration of the present invention, it is preferable that the casing opening is formed in the casing to have a cylindrical shape, a cylindrical support cylindrical portion which supports the seal member is inserted into the casing opening in a state of being inserted into the body portion of the seal member, the positioning portion has a groove-like or rib-like shape and is provided on the inner circumferential surface of the casing opening along the axial direction of the casing opening, and the rotation stopping portion engaged with the positioning portion has a rib-like or groove-like shape and is provided on the outer circumferential surface of the seal member.

According to such a configuration, the rib is inserted into the groove, and thus the angular position around the seal member can be determined with respect to the casing opening and the shift of the angular position can be prevented. Thus, the tip end abutting portion of the seal member can be positioned at a correct angle with respect to the outer circumferential surface of the rotor to prevent the seal part of the seal member from being in a different surface pressure state depending on the position in the circumferential direction and to suppress the deterioration in the seal function.

### Advantageous Effects of Invention

According to the present invention, one seal member can have a seal function and a spring function to be required, so that a spring is not required as a separate member and the reduction in cost and the efficiency of an assembly operation can be achieved. Moreover, the seal member can be positioned and held in a correct angular position around the axis thereof, so that the seal function can be further reliably obtained.

### Brief Description of Drawings

Fig. 1 is a perspective view illustrating a rotary valve of an embodiment of the present invention.
Fig. 2 is a perspective view illustrating the rotary valve.
Fig. 3 is a partially cutaway perspective view illustrating the rotary valve.
Fig. 4 is a main part cross-sectional view illustrating the rotary valve.
Fig. 5 is a main part cross-sectional view illustrating a casing of the rotary valve.
Fig. 6 is a cross-sectional view illustrating a seal member of the rotary valve.
Fig. 7 is a main part cross-sectional view illustrating a connection member of a support cylindrical portion of the rotary valve.

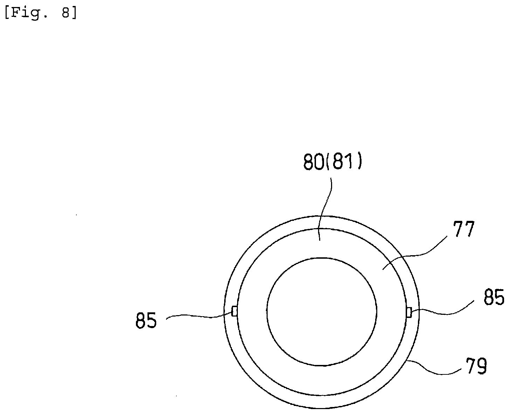

Fig. 8 is a plane view illustrating the seal member.
Fig. 9 is a partial cross-sectional view illustrating the seal member.
Fig. 10 is a main part side view illustrating a casing opening of the casing.
Fig. 11 is a main part cross-sectional view illustrating an inwardly curved portion as a tip end abutting portion of the seal member.
Fig. 12 is a main part cross-sectional view illustrating an outwardly curved portion as the tip end abutting portion of the seal member.
Fig. 13 is a main part cross-sectional view illustrating the inwardly curved portion and the outwardly curved portion as the tip end abutting portion of the seal member.

### Description of Embodiments

Hereinafter, an embodiment of the present invention will be described with reference to the drawings.

A rotary valve of this embodiment is used, for example, to control cooling water of the engine of a vehicle, and in an engine cooling system which includes a main flow passage that is mounted on an engine block of the engine to circulate the cooling water between the engine block and a radiator, a sub-flow passage which supplies the cooling water to a device (for example, a heater or a throttle) that needs temperature adjustment using the cooling water, and a bypass flow passage that bypasses the radiator, the rotary valve is used to open and close the main flow passage and the sub-flow passage.

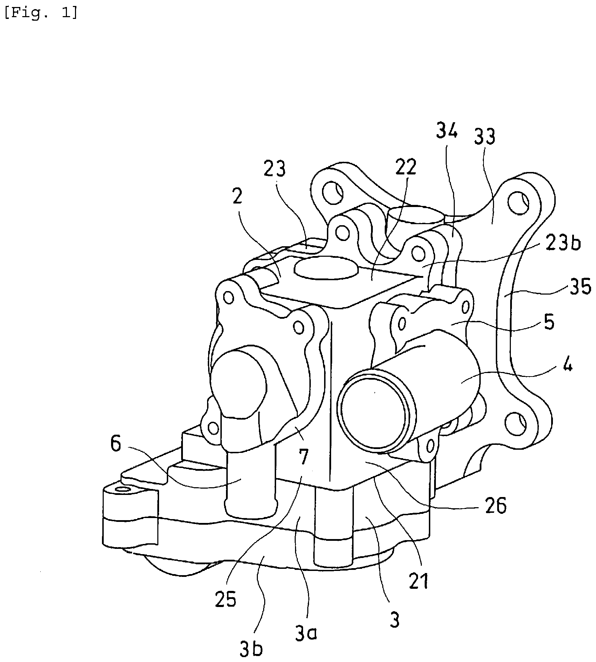

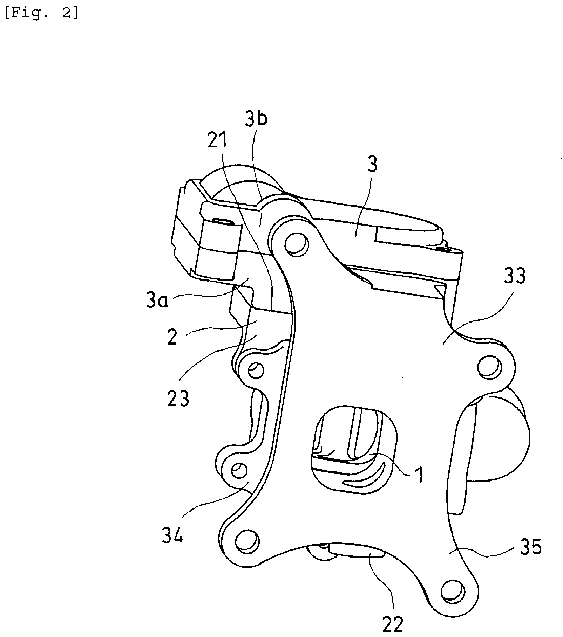

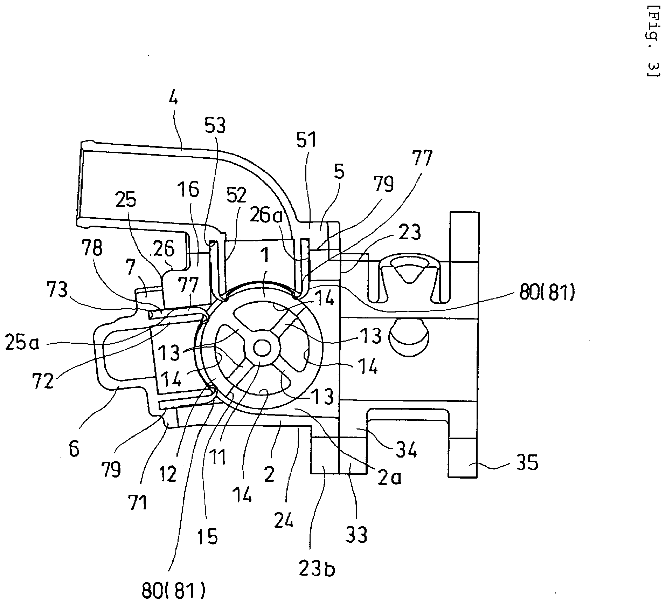

As illustrated in Figs. 1 to 3, a rotor 1 (illustrated in Fig. 3), a casing 2 which rotatably accommodates the rotor 1, a rotation driving device 3 (illustrated as an external form covered by casings 3a and 3b for the rotation driving device 3) which drives the rotor 1 to rotate, a main connection member 5 which includes a main connection pipe 4 that is connected to the main flow passage and causes the cooling water (fluid) to flow out (or flow in), and a sub-connection member 7 which includes a sub-connection pipe 6 that is connected to the sub-flow passage and causes the cooling water to flow out (or flow in) are provided.

The rotor 1 includes a cylindrical rotating shaft 11 which is thin and long, a cylindrical portion 12 which is formed in a thick cylindrical shape centered on the rotating shaft 11, and spoke portions 13 which have shapes that extend in four directions from the rotating shaft 11 along the radial direction of the cylindrical portion 12 at both end portions of the cylindrical portion 12 in the axial direction thereof and are connected to the cylindrical portion 12.

Right and left end surface parts of the rotor 1 are formed as the spoke portions 13 which have shapes that extend from the above-described rotating shaft 11 in the four directions, and thus there are openings between the parts that extend in the four directions. Therefore, four openings (end surface side openings) 14 are respectively provided in the right and left end surfaces of the rotor 1, and the area occupied by the openings 14 is larger than the area occupied by the spoke portions 13 at the end surfaces of the rotor 1.

In addition, the end portions of the rotating shaft 11 respectively protrude from both the end surfaces of the rotor 1.

In the outer circumferential surface of the rotor 1 (the cylindrical portion 12), a rotor opening 15 having a circumferential length of substantially the half (slightly shorter than the half) of the outer circumferential surface is provided. Both the end portions of the rotor opening 15 in the circumferential direction are formed in a semicircular shape. In addition, the length of the width of the rotor opening 15 along the axial direction of the rotor 1 is equal to or longer than the half of the length of the rotor 1 along the axial direction, and for example, equal to or longer than two thirds thereof.

The rotor opening 15 of the outer circumferential surface of the rotor 1 is provided in the cylindrical portion 12 of the rotor 1, and penetrates through the cylindrical portion 12 so that the inside and the outside of the rotor 1 (the cylindrical portion 12) communicate with each other.

A part of the outer circumferential surface of the rotor 1 (cylindrical portion 12) excluding the rotor opening 15 is a rotor outer circumference blocking surface 16 which is an outer circumferential surface with no opening. Here, the length of the rotor opening 15 along the circumferential direction of the outer circumferential surface of the rotor 1 is substantially the half of the length of the entire circumference, and the length of the rotor outer circumference blocking surface 16 with no opening is substantially the half of the length along the circumferential direction of the outer circumferential surface of the rotor 1.

The casing 2 is formed substantially in a hexahedron (rectangular parallelepiped) box shape, and a rotor accommodating space 2a (illustrated in Fig. 3) which rotatably accommodates the rotor 1 is formed inside the casing 2. Two surfaces among the six surfaces of the casing 2 which oppose each other have inner surfaces that oppose the end surfaces of the rotor 1, and the other four surfaces have inner surfaces that oppose the outer circumferential surface of the rotor. Here, plate-like parts which respectively form the surfaces of the hexahedron are referred to as a first plate-like portion 21 to a sixth plate-like portion 26.

The plate-like parts having inner surfaces that oppose the end surfaces of the rotor 1 are referred to as the first plate-like portion 21 and the second plate-like portion 22, and the plate-like parts having inner surfaces that oppose the outer circumferential surface of the rotor 1 are referred to as the third plate-like portion 23 to the sixth plate-like portion 26.

The rotation driving device 3 is mounted on the first plate-like portion 21 which is one of the first plate-like portion 21 and the second plate-like portion 22. A hole into which the rotor 1 can be inserted is provided in the first plate-like portion 21. The hole is blocked by a lid member (not illustrated). The driving shaft of the rotation driving device 3 passes through the lid member in a state of being sealed, and is connected to the rotor 1 to drive the rotor 1 to rotate.

The rotation driving device 3 is provided with, for example, a motor which rotates the driving shaft therein. The driving shaft is connected to the motor via a decelerator. The driving shaft is connected to one end portion of the rotating shaft 11 of the rotor 1. The other end portion of the rotating shaft 11 is rotatably supported by a bearing portion (not illustrated) of the second plate-like portion 22.

The third plate-like portion 23 of which the inner surface opposes the outer circumferential surface of the rotor 1 is provided so that the outer circumferential part thereof extends outward in a flange shape to serve as a flange portion 23b, and a part surrounded by the first plate-like portion 21, the second plate-like portion 22, the fourth plate-like portion 24, and the sixth plate-like portion 26 is an opening.

The flange portion 23b is mounted at a mounting position having an opening of the engine block of the engine via a connection member 33. The connection member 33 is a cylindrical member in which a flange portion 34 which is connected to the flange portion 23b is provided on the opening side of one end portion thereof and a flange portion 35 which is connected to the engine block is provided on the other opening side. The rotary valve is connected to the engine block via the connection member 33.

The third plate-like portion 23 to which the connection member 33 is connected is provided with the opening as described above so that the cooling water can flow into the opening from the engine block side via the connection member 33. Note that, a configuration may also be employed in which the cooling water flows out to the engine block side.

The sub-connection member 7 described above is mounted on the outer surface of the fifth plate-like portion 25. The fifth plate-like portion 25 is provided with an opening (casing opening) 25a which communicates with the sub-connection pipe 6 of the sub-connection member 7.

The opening 25a is the opening 25a on the outflow side (may also be the inflow side) at which the cooling water flows out from the rotary valve to the outside. For example, the cooling water which flows out from the opening 25a is circulated through the sub-flow passage (for example, including a heater or the like), and is returned to the engine block from a pump.

The fifth plate-like portion 25 is disposed to oppose and is substantially parallel to the third plate-like portion 23 having an opening 23a on an inflow side (may also be an outflow side) and is disposed to be substantially perpendicular to the sixth plate-like portion 26 and the fourth plate-like portion 24.

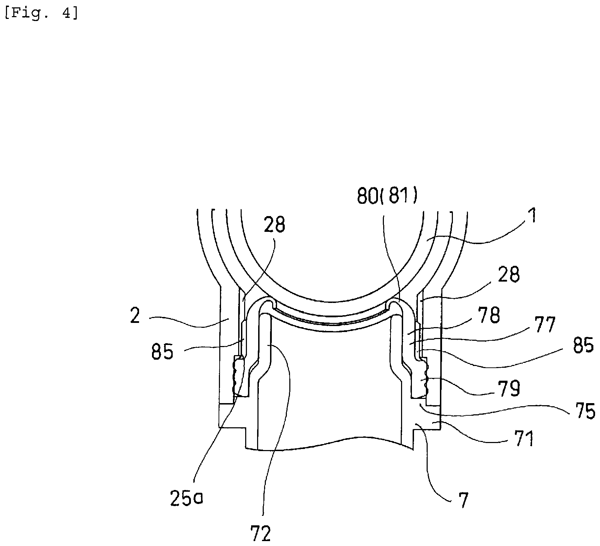

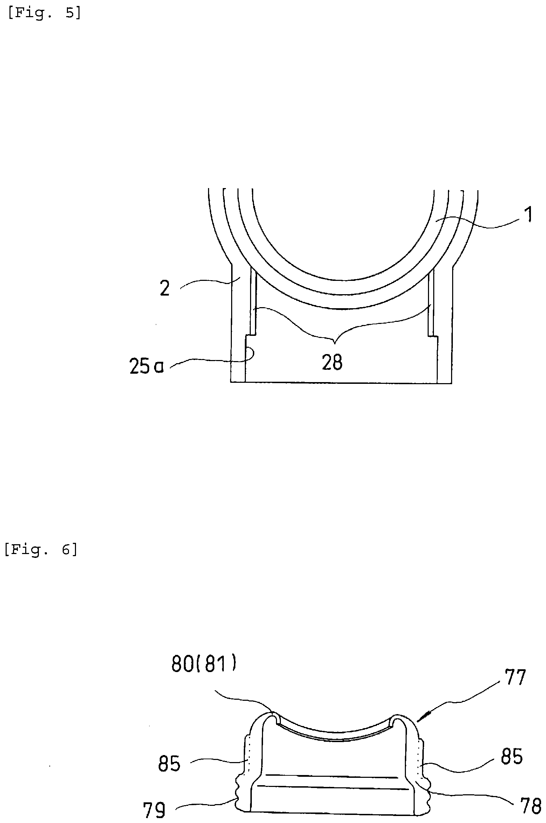

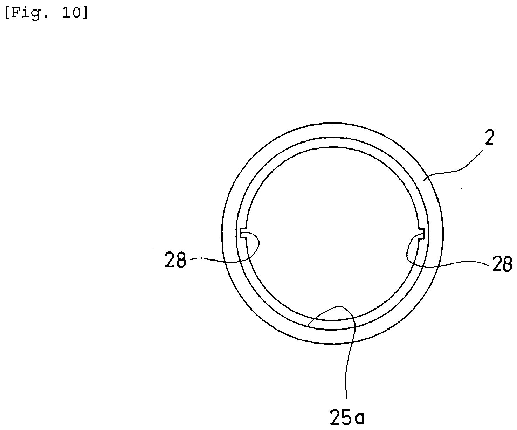

The opening 25a has a cylindrical inner circumferential surface. In addition, as illustrated in Fig. 4, Fig. 5, and Fig. 10, a pair of groove-like positioning portions 28 is provided on the inner circumferential surface of the opening 25a to extend in an axial direction thereof. The positioning portion 28 is positioned to be in parallel with a direction orthogonal to the axial direction of the rotor 1 and to intersect with the cylindrical inner circumferential surface on a line passing the central axis (orthogonal to the central axis) of the opening 25a having the cylindrical inner circumferential surface.

In addition, the cylindrical opening 25a is configured such that an inner diameter of the tip end side (sub-connection member 7 side) thereof is larger than that of the base-end side (rotor 1 side) thereof. The groove-like positioning portion 28 is provided at the base-end side having the inner diameter of the inner circumferential surface of the opening 25a narrower than that of the tip end side.

The sub-connection member 7 includes a plate-like connection portion 71, and a support cylindrical portion 72 having a cylindrical shape that extends from the connection portion 71 in a state of being inserted into the opening 25a. A through-hole is formed in the connection portion 71 of the sub-connection member 7, and the through-hole communicates with the inside of the support cylindrical portion 72 on the inner surface side of the connection portion 71 and communicates with the inside of the sub-connection pipe 6 on the outer surface side. Accordingly, the support cylindrical portion 72 and the sub-connection pipe 6 communicate with each other.

A tip shape of the support cylindrical portion 71 has a curved shape along the cylindrical outer circumferential surface.

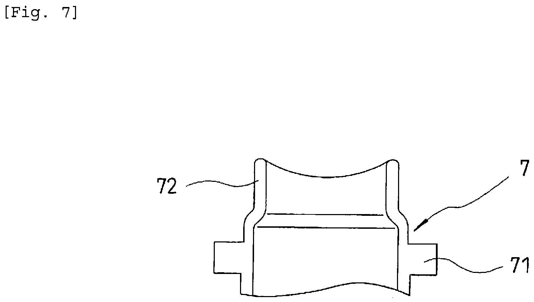

Furthermore, as illustrated in Figs. 4 and 7, the support cylindrical portion 72 is configured such that a diameter of the base end portion is slightly larger than that of the tip end portion in accordance that a diameter of the tip end portion of the opening 25a in the casing 2 is slightly larger than that of the base end portion. Note that, a direction of the tip end side of the support cylindrical portion 72 is reverse to a direction of the tip end side of the cylindrical opening 25a.

In addition, the inner surface of the connection portion 71 comes into surface contact with the side surface of the outside of the opening 25a of the fifth plate-like portion 25 such that the opening 25a is in a state of being blocked in a state where the sub-connection member 7 is connected to the casing 2. However, the opening 25a communicates with the sub-connection pipe 6 via the support cylindrical portion 72.

An annular support groove 73 is formed on the outer circumferential side of the support cylindrical portion 72 of the connection portion 71.

The inner diameter of the cylindrical opening 25a and the outer diameter of the annular support groove 73 are substantially equal to each other. The inner diameter of the support groove 73 and the outer diameter of the support cylindrical portion 72 are substantially equal to each other. The outer diameter of the support cylindrical portion 72 is narrower than the inner diameter of the opening 25a. In addition, the opening 25a, the support cylindrical portion 72, and the support groove 73 are disposed on substantially the same axis.

Note that, as illustrated in a schematic cross-sectional view of Fig. 4, instead of providing the support groove 73, an annular protrusion 75 may be provided in the sub-connection member 7. The outer diameter of the annular protrusion 75 is substantially equal to the inner diameter of the opening 25a so as to be inserted into the opening 25a. The inner diameter of the protrusion 75 is equal to the outer diameter of the support cylindrical portion 72.

Note that, as illustrated in Fig. 7, the annular support groove 43 or the annular protrusion 75 may not be provided around the support cylindrical portion 72 of the sub-connection member 7.

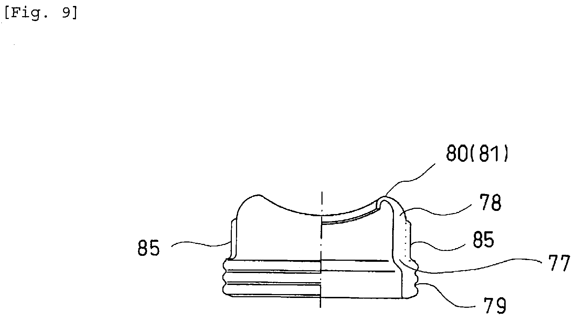

A cylindrical seal member 77 is provided in the support cylindrical portion 72 so as to cover the outer circumference thereof. That is, the support cylindrical portion 72 is inserted into the cylindrical seal member 77. The seal member 77 is, for example, a rubber or resin member, and is made of a resin member having a relatively low coefficient of friction. The inner diameter of the seal member 77 is equal to or slightly narrower than the outer diameter of the support cylindrical portion 72, and the support cylindrical portion 72 is inserted into the seal member 77 in a state in which the seal member 77 is elastically deformed such that the diameter thereof is enlarged. In addition, as illustrated in Figs. 4, 6, and 9, the inner diameter and the outer diameter of the seal member become wider at the tip end side relative to the base-end side in accordance that the outer diameter of the base-end side of the support cylindrical portion 72 is larger than that of the tip end side and the inner diameter of the tip end side of the cylindrical opening 25a is larger than that of the base-end side.

As illustrated in Figs. 4, 6, and 9, the seal member 77 is provided with a cylindrical body portion 78, a circumferential surface seal portion 79 having a wall thickness provided on the base end portion of the body portion 78, and a tip end abutting portion 80 provided on the tip end portion. With respect to the tip end abutting portion 80 and the body portion 78 (excluding the circumferential surface seal portion 79), the inner diameter and the outer diameter of the circumferential surface seal portion 79 become larger.

The seal member 77 is disposed so that the end surface of the base end portion thereof abuts on the bottom surface of the support groove 73. As illustrated in Fig. 4, in a case where the protrusion 75 is provided, the end surface of the base end portion of the seal member 77 abuts on the protrusion 75.

In addition, as the circumferential surface seal portion 79, three protrusions (in three stages) which are formed along the circumferential direction are provided in the base end portion along the axial direction. The cross-section of the protrusion has a substantially arc shape which expands toward the outer circumferential side. The wall thickness (thickness) of the circumferential surface seal portion 79 at the apex of the protrusion of the circumferential surface seal portion 79 is longer than the length of the half of the difference between the inner diameter and the outer diameter of the support groove 73.

The wall thickness (thickness) at the apex of the protrusion of the circumferential surface seal portion 79 is longer than the length of the half of the difference between the outer diameter of the support cylindrical portion 72 and the inner diameter of the opening 25a of the fifth plate-like portion 25 of the casing 2.

Here, a part which is disposed inside the support groove 73 of the circumferential surface seal portion 79 and a part which is disposed between the outer circumferential surface of the support cylindrical portion 72 and the inner circumferential surface of the opening 25a are elastically deformed to respectively correspond to the intervals thereof.

The end surface of the body portion 78 on the base end portion (including the circumferential surface seal portion 79) side is disposed on a single plane along the bottom surface of the support groove 73. The shape of the tip end portion of the body portion 78 that faces the rotor 1 side is a shape that is curved along the cylindrical surface. That is, the shape is a linear shape in a direction along the axial direction of the rotor 1 and is a circumferential shape in a direction along the circumferential direction, which follows the cylindrical surface. The shape of the tip end of the body portion 78 is the same as the shape of the tip end of the support cylindrical portion 72.

In this embodiment, the tip end abutting portion 80 is an inwardly curved portion 81 which is formed to extend from the tip end of the body portion 78 toward the rotor 1, is narrowed inwardly toward the tip end side, and is curved to be folded back. The diameter of the inwardly curved portion 81 is reduced toward the tip end side. In addition, since the inwardly curved portion 81 is curved to be folded back, the cross-sectional shape thereof is a fishhook shape with no barb.

Moreover, the thickness of the tip end side of the inwardly curved portion 81 is smaller than that on the base end side thereof. In addition, the inwardly curved portion 81 has a curved shape which is substantially the same as a shape which draws a circle on the above-described cylindrical surface of the tip end portion of the body portion 78, and is disposed between the tip end of the body portion 78 and the outer circumferential surface of the rotor 1. Therefore, in a state where the inwardly curved portion 81 abuts on the outer circumferential surface of the rotor 1, the abutting part thereof has a shape along the cylindrical surface.

The part of the inwardly curved portion 81 which comes into contact with the outer circumferential surface of the rotor 1 is not the tip end which is folded back to face the opposite side to the rotor 1, and a part which faces the outer circumferential surface of the rotor 1 in the curved portion between the tip end and the base end of the inwardly curved portion 81 comes into contact with the rotor 1. In addition, the part of the inwardly curved portion 81 which comes into contact with the rotor 1 is a part that is already thinned from the body portion 78.

That is, the thickness of the base end of the inwardly curved portion 81 is substantially the same as that of the body portion 78, and is narrowed toward the tip end. However, the thickness of a part from the position slightly closer to the base end side than the part that comes into contact with the rotor 1 to the tip end is a substantially constant thickness, and this part is the thinnest state.

The inwardly curved portion 81 functions as a spring when elastically deformed due to this shape, and the spring is in a state of being elastically deformed by being pressed against the outer circumferential surface of the rotor 1. The tip end side of the inwardly curved portion 81 (the tip end abutting portion 80) has a shape that is curved along the cylindrical surface to correspond to the outer circumferential surface of the rotor 1, and as the tip end portion of the body portion 78 has a shape that is curved along the cylindrical surface as described above, the base end portion of the inwardly curved portion 81 has a shape that is curved along the cylindrical surface.

The distance between the part of the inwardly curved portion 81 that abuts on the rotor 1 and the base end portion thereof is constant regardless of position in the circumferential direction. That is, the axial direction of the cylindrical surface shape which is the shape of the inwardly curved portion 81 on the tip end side thereof and the axial direction of the cylindrical surface shape which is the shape on the base end side thereof are disposed to be parallel to each other, and the tip end side and the rear end side of the inwardly curved portion 81 are in a state of following the surface in the same direction as the cylindrical surface. In addition, the shape of the tip end portion of the support cylindrical portion 72 is also substantially the same as the tip end shape of the body portion 78, and the inwardly curved portion 81 is disposed closer to the tip end side than the support cylindrical portion 72.

In addition, the cylindrical inwardly curved portion 81 has a structure which comes into contact with the rotor 1 over the entire circumference. Therefore, in a state where the inwardly curved portion 81 comes into contact with the rotor outer circumference blocking surface 16 of the rotor 1, the tip end side opening of the cylindrical seal member 77 is in a state of being completely blocked. At this time, the support cylindrical portion 72 is in a state of being blocked, and the sub-connection pipe 6 is in a state of being blocked.

In a case where the rotor opening 15 and the inwardly curved portion 81 overlap each other, the valve is in a state of being opened, and the cooling water that flows from the opening of the third plate-like portion 23 can be in a state of flowing out from the engine block side to a sub-passage side via the internal space of the rotor 1. Note that, a configuration may also be employed in which the inflow and outflow of the cooling water are switched.

Note that, the opening degree of the valve is adjusted by a ratio at which the rotor opening 15 and the inwardly curved portion 81 overlap, thereby adjusting a flow rate.

The rotor opening 15 is formed such that an opening for a sub-passage and an opening for a main passage to be described are fitted and integrated with each other in a circumferential direction, and a length of the rotor opening 15 along the circumferential direction of the rotor 1 becomes longer than a diameter of a part at which the inwardly curved portion 81 comes in contact with the rotor 1.

A pair of rib-like rotation stopping portions 85 is provided on the outer circumferential surface of the body portion 78 of the seal member 77 so as to correspond to the groove-like positioning portions 28 of the opening 25a of the casing 2. The rib-like rotation stopping portions 85 are provided along the axial direction of the cylindrical seal member 77 and are provided at a part which protrudes to the most tip end side of the tip end abutting portion 80 (inwardly curved portion 81).

That is, the rotation stopping portion 85 is provided at two points at which the tip end abutting portions 80 are disposed to be farthest from each other and on the outer circumferential surface of the body portion 78 corresponding to two points corresponding to apex parts. The rotation stopping portion 85 can be inserted into the pair of groove-like positioning portions 28 formed on the inner circumferential surface of the cylindrical opening 25a of the casing 2.

When the rib-like rotation stopping portions 85 of the seal members 77 are inserted into the groove-like positioning portions 28 formed on the inner circumferential surface of the opening 25a of the casing 2, an angular position around the axis of the seal member 77 is correct with respect to the rotor 1, and thus it is possible to make a state in which the same surface pressure is applied to any position in the circumferential direction of the contact part on which the tip end abutting portion 80 (inwardly curved portion 81) comes in contact with the rotor 1.

That is, the inwardly curved portion 81 (tip end abutting portion 81) functions as a spring and is pressed against the outer circumferential surface of the rotor 1, but the surface pressure generated between the outer circumferential surface of the rotor 1 and the tip end abutting portion 81 by the biasing force of the spring varies depending on the position in the circumferential direction to cause the deterioration in the seal function when the angular position around the axis of the seal member 77 is not correctly positioned. On the other hand, the angular position of the seal member 77 can be correctly adjusted by the above-mentioned positioning portion 28 and the rotation stopping portion 85 to improve the seal function.

The above-mentioned main connection member 5 is mounted on the outer surface of the sixth plate-like portion 26. The sixth plate-like portion 26 is provided with an opening (casing opening) 26a which communicates with the main connection pipe 4 of the main connection member 5.

The opening 26a is the opening 26a on the outflow side (may also be inflow side) through which the cooling water flows out from the rotary valve to the outside. For example, the cooling water which flows out from the opening 26a is circulated through the main flow passage. The cooling water is returned to the engine block from the pump via the radiator.

The sixth plate-like portion 26 is disposed to be substantially perpendicular to the third plate-like portion 23 having the opening 23a on the inflow side (may also be the outflow side) and the fifth plate-like portion 25.

The opening 26a has a cylindrical inner circumferential surface. In addition, even though not illustrated, the positioning portion 28 is provided on the inner circumferential surface of the opening 26a as in the opening 25a.

The main connection member 5 includes a plate-like connection portion 51, and a support cylindrical portion 52 having a cylindrical shape that extends from the connection portion 51 in a state of being inserted into the opening 26a. A through-hole is formed in the connection portion 51 of the main connection member 5, and the through-hole communicates with the inside of the support cylindrical portion 52 on the inner surface side of the connection portion 51 and communicates with the inside of the main connection pipe 4 on the outer surface side. Accordingly, the support cylindrical portion 52 and the main connection pipe 4 communicate with each other.

In addition, the inner surface of the connection portion 51 comes into surface contact with the side surface of the outside of the opening 26a of the sixth plate-like portion 26 such that the opening 26a is in a state of being blocked in a state where the main connection member 5 is connected to the casing 2. However, the opening 26a communicates with the sub-connection pipe 6 via the support cylindrical portion 52.

An annular support groove 53 is formed on the outer circumferential side of the support cylindrical portion 52 of the connection portion 51.

The inner diameter of the cylindrical opening 26a and the outer diameter of the cylindrical support groove 53 are substantially equal to each other. The inner diameter of the support groove 53 and the outer diameter of the support cylindrical portion 52 are substantially equal to each other. The outer diameter of the support cylindrical portion 52 is narrower than the inner diameter of the opening 26a. In addition, the opening 26a, the support cylindrical portion 52, and the support groove 53 are disposed on substantially the same axis.

Similarly to the case of the sub-connection member 7, instead of providing the support groove 53, an annular protrusion may be provided. The sub-connection member 7 and the main connection member 5 have different structures in the sub-connection pipe 6 and the main connection pipe 4 provided therein. However, since the shapes of the connection portions 51 and 71 on the inner surface sides are substantially the same, the support cylindrical portion 72 and the support cylindrical portion 52 have the same shape, and the support groove 73 and the support groove 53 have the same shape.

The cylindrical seal member 77 is provided in the support cylindrical portion 52 to cover the outer circumference thereof. That is, the support cylindrical portion 52 is inserted into the cylindrical seal member 77. The seal member 77 is similar to the seal member 77 on the above-mentioned sub-connection member 7 side, which has the similar shape and the similar function. That is, as described above, the seal member 77 includes the body portion 78, the circumferential surface seal portion 79, the tip end abutting portion 80 (inwardly curved portion 81), and the rotation stopping portion 85.

According to the above-described seal member 77, the base end portion sides seal the openings 25a and 26a of the casing 2 with the circumferential surface seal portions 79. Basically, the circumferential surface seal portions 79 on the base end portion sides of the body portions 78 of the seal members 77 cover and seal between the inner circumferential surfaces of the openings 25a and 26a and the support cylindrical portions 52 and 72 which are respectively inserted into the openings 25a and 26a.

That is, the circumferential surface seal portions 79 which protrude from the outer circumferential surface sides of the base end portions of the seal members 77 in the three stages are in a state where the thicknesses thereof between the inner circumferential surfaces of the openings 25a and 26a and the support cylindrical portions 52 and 72 are compressed, and the cooling water is sealed by this part. That is, the circumferential surface seal portion 79 functions as a seal ring.

In a state where the tip end portion of the seal member 77 is pressed against the outer circumferential surface of the rotor 1, the inwardly curved portion 81 of the tip end abutting portion 80 functions as a spring such that a sealed state is achieved in a state where the tip end of the seal members 77 is pressed against the rotor 1.

In this case, the inwardly curved portion 81 is not simply compressed as a rubber-like elastic member but undergoes bending deformation to function as the spring. Accordingly, compressive stress, tensile stress, and shearing stress occur due to the bending.

Therefore, the tip end abutting portion 80 can obtain a relatively large basing force as the spring, and has a large elastic deformation amount.

By the basing force of the inwardly curved portion 81 as the spring, the infiltration of foreign matter between the seal member 77 and the rotor 1 is prevented. In a case where the foreign matter is infiltrated, the member for sealing can be significantly deformed and thus the foreign matter is easily removed. In addition, the end surface of the seal member 77 on the base end portion side is pressed against the sub-connection member 7 (the main connection member 5) by the biasing force of the inwardly curved portion 81 which functions as the spring, thereby proving a sealing function. Due to the followability of the spring with respect to the outer circumferential surface of the rotor 1 and the like, a heavy load is not applied to the rotation of the rotor 1, and for example, a low frictional material such as polytetrafluoroethylene is not needed for the part which abuts on and slides with the rotor 1. Here, it is preferably to use a material having a coefficient of friction as low as possible.

The seal member 77 which is a single member and includes the circumferential surface seal portions 79 that functions as the seal ring on the base end portion side as described above and the tip end abutting portion 80 (the inwardly curved portion 81) which functions as the seal that abuts on the rotor 1 and functions as the spring. That is, the single member can realize at least three functions. Note that, it is preferable that as the rubber or resin material used in the seal member 77, those having a coefficient of friction as low as possible be selected among rubber or resin materials having the performance for functioning as the seal ring, the seal, and the spring described above.

In addition, due to the positioning portion 28 of the casing 2 and the rotation stopping portion 85 of the seal member 77 as described above, the seal member 77 is disposed at a correct angular position, and thus biasing force of the seal member 77 functioning as the spring can be uniformly applied to the outer circumferential surface of the rotor 1.

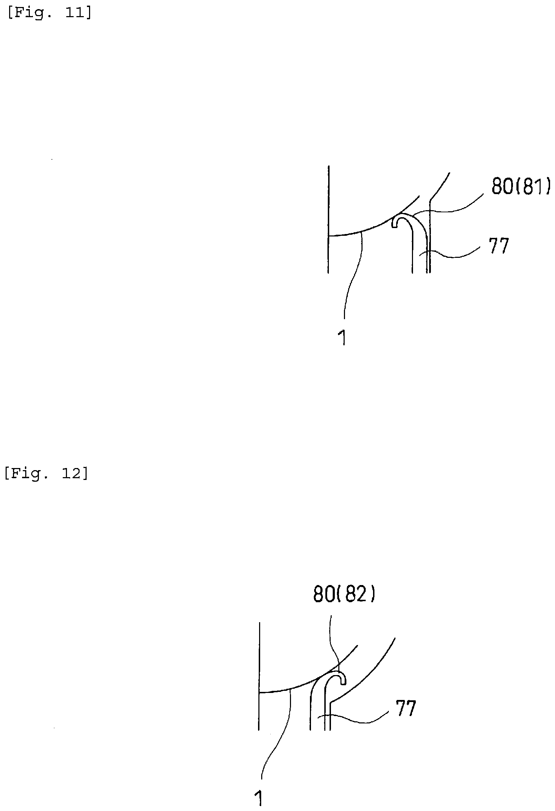

In this embodiment, as the tip end abutting portion 80, for example, the inwardly curved portion 81 illustrated in Fig. 11 is provided. However, an outwardly curved portion 82 illustrated in Fig. 12 may also be provided. The outwardly curved portion 82 extends from the body portion 78 of the seal member 77 toward the rotor 1 and abuts on the outer circumferential surface of the rotor 1. The outwardly curved portion 82 is widened outwardly toward the tip end side, and is curved to be folded back. The curved part between the base end portion and the tip end portion of the outwardly curved portion 82 comes into contact with the outer circumferential surface of the rotor 1.

The outwardly curved portion 82 is curved outward, but functionally has the same functions as those the inwardly curved portion 81 and functions as the seal and the spring. In addition, for example, in a case where the cooling water flows from the rotor opening 15 side to the openings 25a and 26a of the casing, that is, in a case where a water pressure inside the rotor 1 is higher than that outside the rotor 1, it is preferable to use the above-described inwardly curved portion 81, and higher seal performance than a case of using the outwardly curved portion 82 can be obtained.

Contrary to this, in a case where the cooling water flows from the openings 25a and 26a of the casing to the rotor opening 15, that is, in a case where a water pressure outside the rotor 1 is higher than that inside the rotor 1, it is preferable to use the above-described outwardly curved portion 82, and higher seal performance than a case of using the inwardly curved portion 81 can be obtained.

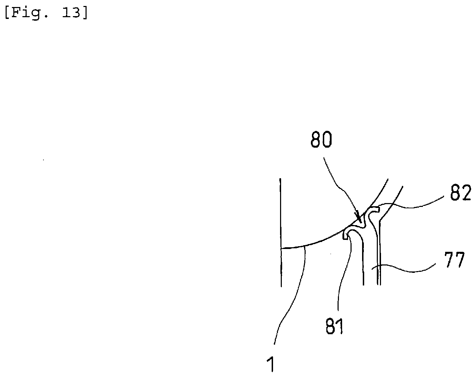

In addition, in a case where the direction of the water flow is changed, for example, as illustrated in Fig. 13, both the inwardly curved portion 81 and the outwardly curved portion 82 may be provided as the tip end abutting portion 80. In this case, even when the water flow direction is changed, the seal performance can be prevented from being degraded.

### Reference Signs List

- 1: rotor
- 2: casing
- 2a: rotor accommodating space
- 15: rotor opening
- 25a: casing opening
- 26a: casing opening
- 28: positioning portion
- 77: seal member
- 78: body portion
- 79: circumferential surface seal portion
- 80: tip end abutting portion
- 81: inwardly curved portion
- 82: outwardly curved portion
- 85: rotation stopping portion

## Claims

1. A rotary valve comprising: a rotor (1) which is rotated to open and close a flow passage; and a casing (2) which accommodates the rotor (1), wherein a rotor opening (15) which is a part of a passage of a fluid is formed in a cylindrical outer circumferential surface of the rotor (1), a rotor accommodating space (2a) which rotatably accommodates the rotor (1) is formed in the casing (2), a casing opening (25a, 26a) which is a passage of the fluid when communicating with the rotor opening is formed in an inner surface of the rotor accommodating space (2a) of the casing (2) that faces the rotor (1), a cylindrical seal member (77) which extends to abut on the outer circumferential surface of the rotor (1) including the rotor opening (15), and
a positioning portion (28) which determines an angular position around an axis of the seal member (77) are provided in the casing opening (25a,26a), the cylindrical seal member (77) includes a cylindrical body portion (78) in which a tip end shape on the rotor side is a shape along the outer circumferential surface of the rotor (1), a tip end abutting portion (80) which is provided in a tip end portion of the body portion (78) on the rotor side to be integrated with the body portion (78) toward the outer circumferential surface of the rotor (1) and abuts on the outer circumferential surface of the rotor (1), and a rotation stopping portion (85) which is engaged with the positioning portion (28) of the casing opening (25a,26a) to regulate a rotation around the axis of the seal member (77) and to determine the angular position around the axis of the seal member (77), the tip end abutting portion (80) has a cylindrical shape and has a shape that is curved along the outer circumferential surface of the rotor (1), **characterized in that** :
the tip end abutting portion (80) includes an inwardly curved portion (81) which is narrowed inwardly toward a tip end side and is curved to be folded back and/or an outwardly curved portion (82) which is widened outwardly toward the tip end side and is curved to be folded back, and the seal member (77) is disposed so that the inwardly curved portion (81) and/or the outwardly curved portion (82) is pressed against the outer circumferential surface of the rotor (1) .

2. The rotary valve according to claim 1, wherein the casing opening (25a,26a) is formed in the casing (2) to have a cylindrical shape, a cylindrical support cylindrical portion which supports the seal member (77) is inserted into the casing opening (25a,26a) in a state of being inserted into the body portion of the seal member (77), the positioning portion has a groove-like or rib-like shape and is provided on an inner circumferential surface of the casing opening (25a,26a) along an axial direction of the casing opening, and the rotation stopping portion engaged with the positioning portion has a rib-like or groove-like shape and is provided on an outer circumferential surface of the seal member (77).

## Patentansprüche

1. Drehventil, umfassend:
einen Rotor (1), welcher zum Öffnen und Schließen eines Flussdurchlasses gedreht wird;
und ein Gehäuse (2), welches den Rotor (1) aufnimmt, wobei eine Rotoröffnung (15), welche Teil eines Durchlasses eines Fluides ist, in einer zylindrischen äußeren Umfangsoberfläche des Rotors (1) gebildet ist, wobei ein Rotoraufnahme-Raum (2a), welcher den Rotor (1) drehbar lagert, im Gehäuse (2) ausgebildet ist,
wobei eine Gehäuseöffnung (25a, 26a), welche ein Durchgang des Fluids ist, wenn sie mit der Rotoröffnung kommuniziert, in einer inneren Oberfläche des Rotoraufnahme-Raums (2a), welche dem Rotor (1) gegenüberliegt, gebildet ist,
wobei ein zylindrisches Dichtungsteil (77), welches sich erstreckt, um an der äußeren Umfangsoberfläche des Rotors (1) mit der Rotoröffnung (15) anzuliegen, und
ein Positionierabschnitt (28), welcher eine Winkelposition um eine Achse des Dichtungsteils (77) bestimmt, in der Gehäuseöffnung (25a, 26a) vorgesehen sind,
wobei das zylindrische Dichtungsteil (77) einen zylindrischen Körperabschnitt (78), bei welchem eine Spitzenendform auf der Rotorseite eine Form entlang einer äußeren Umfangsoberfläche des Rotors (1) bildet, einen am Spitzenende anliegenden Abschnitt (80), welcher in einem Spitzenendabschnitt des Körperabschnitts (78) auf der Rotorseite vorgesehen ist, um in dem Körperabschnitt (78) hin zur äußeren Umfangsoberfläche des Rotors (1) integriert zu sein und an die äußere Umfangsoberfläche des Rotors (1) anliegt, und einen Drehstoppabschnitt (85), welcher mit dem Positionierabschnitt (28) der Gehäuseöffnung (25a, 26a) in Eingriff steht, um eine Drehung um die Achse des Dichtungsteils (77) zu regulieren und um die Winkelposition um die Achse des Dichtungsteils (77) zu bestimmen, einschließt,
wobei der am Spitzenende anliegende Abschnitt (80) eine zylindrische Form aufweist und eine Form aufweist, welche entlang der äußeren Umfangsoberfläche des Rotors (1) gekrümmt ist, **dadurch gekennzeichnet, dass**
der am Spitzenende anliegende Abschnitt (80) einen nach innen gekrümmten Abschnitt (81), welcher sich nach innen hin zu einer Spitzenendseite verjüngt und gekrümmt ist, um zurückgefaltet zu werden, und / oder einen nach außen gekrümmten Abschnitt (82), welcher sich nach außen hin zur Spitzenendseite verbreitert und gekrümmt ist, um zurückgefaltet zu werden, einschließt,
und das Dichtungsteil (77) so angeordnet ist, dass der nach innen gekrümmte Abschnitt (81) und / oder der nach außen gekrümmte Abschnitt (82) gegen die äußere Umfangsoberfläche des Rotors (1) gedrückt wird / werden.

2. Drehventil gemäß Anspruch 1, wobei die Gehäuseöffnung (25a, 26a) im Gehäuse (2) zum Bilden einer zylindrischen Form ausgebildet ist, wobei ein zylindrischer Trägerabschnitt, welcher das Dichtungsteil (77) lagert, in die Gehäuseöffnung (25a, 26a) in einem Zustand, in dem es in den Körperabschnitt des Dichtungsteils (77) eingesetzt ist, eingesetzt wird, wobei der Positionierabschnitt eine rillenähnliche oder rippenähnliche Form aufweist und auf einer inneren Umfangsoberfläche der Gehäuseöffnung (25a, 26a) entlang einer axialen Richtung der Gehäuseöffnung vorgesehen ist, und der Drehstoppabschnitt, welcher mit dem Positionierabschnitt in Eingriff steht, eine rippenähnliche oder rillenähnliche Form aufweist und auf einer äußeren Umfangsoberfläche des Dichtungsteils (77) vorgesehen ist.

## Revendications

1. Soupape rotative comprenant : un rotor (1) qui est mis en rotation pour ouvrir et fermer un passage d'écoulement; et un boîtier (2) logeant le rotor (1), dans laquelle une ouverture de rotor (15) faisant partie d'un passage d'un fluide est formée dans une surface circonférentielle cylindrique extérieure du rotor (1), un espace de logement de rotor (2a) qui reçoit en rotation le rotor (1) est formé dans le boîtier (2), une ouverture de boîtier (25a, 26a) qui est un passage du fluide lorsqu'il communique avec l'ouverture de rotor est formée dans une surface intérieure de l'espace de logement de rotor (2a) du boîtier (2) faisant face au rotor (1), un élément d'étanchéité cylindrique (77) s'étendant pour venir en butée sur la surface circonférentielle extérieure du rotor (1) comprenant l'ouverture de rotor (15), et une partie de positionnement (28) qui détermine une position angulaire autour d'un axe de l'élément d'étanchéité (77) sont prévus dans l'ouverture de boîtier (25a, 26a), l'élément d'étanchéité cylindrique (77) comprend une partie de corps cylindrique (78) dans laquelle une forme d'extrémité en pointe sur le côté du rotor est une forme le long de la surface circonférentielle extérieure du rotor (1), une partie de butée d'extrémité en pointe (80) qui est prévue dans une partie d'extrémité en pointe de la partie de corps (78) sur le côté de rotor pour être intégrée à la partie de corps (78) en direction de la surface circonférentielle extérieure du rotor (1) et vient en butée sur la surface circonférentielle extérieure du rotor (1), et une partie d'arrêt de rotation (85) qui est en prise avec la partie de positionnement (28) de l'ouverture de boîtier (25a, 26a) pour réguler une rotation autour de l'axe de l'élément d'étanchéité (77) et pour déterminer la position angulaire autour de l'axe de l'élément d'étanchéité (77), la partie de butée d'extrémité en pointe (80) présente une forme cylindrique et présente une forme qui est courbée le long de la surface circonférentielle extérieure du rotor (1), **caractérisé en ce que** :
la partie de butée d'extrémité en pointe (80) inclut une partie courbée vers l'intérieur (81) qui est rétrécie vers l'intérieur en direction d'un côté d'extrémité en pointe et est courbée pour être repliée et/ou une partie incurvée vers l'extérieur (82) qui est élargie vers l'extérieur en direction du côté d'extrémité en pointe et est courbée pour être repliée, et l'élément d'étanchéité (77) est disposé de sorte que la partie incurvée vers l'intérieur (81) et/ou la partie incurvée vers l'extérieur (82) est comprimée contre la surface circonférentielle extérieure du rotor (1).

2. Soupape rotative selon la revendication 1, dans laquelle l'ouverture de boîtier (25a, 26a) est formée dans le boîtier (2) de manière à présenter une forme cylindrique, une partie cylindrique de support cylindrique qui sert de support à l'élément d'étanchéité (77) est inséré dans l'ouverture de boîtier (25a, 26a) dans un état d'insertion dans la partie de corps de l'élément d'étanchéité (77), la partie de positionnement présente une forme de rainure ou de nervure et est prévue sur une surface circonférentielle intérieure de l'ouverture de boîtier (25a, 26a) le long d'une direction axiale de l'ouverture de boîtier, et la partie d'arrêt de rotation engagée avec la partie de positionnement a une forme de nervure ou de rainure et est prévue sur une surface circonférentielle extérieure de l'élément d'étanchéité (77).
